# EUROPÄISCHE PATENTSCHRIFT

(11) **EP 3 663 596 B1**
(45) Veröffentlichungstag und Bekanntmachung des Hinweises auf die Patenterteilung: **07.06.2023**
(21) Anmeldenummer: 19218992.6
(22) Anmeldetag: 06.08.2014
(51) Int. Cl.: F16B 33/00, F16B 37/12, F16B 25/00

(54) **BOLZEN MIT EINER WENDEL ZUM FURCHEN EINES GEWINDES**
BOLT WITH A HELIX FOR FORMING A THREAD
BOULON AVEC UNE HÉLICE POUR TARAUDAGE D'UN FILET

(30) Priorität: 11.09.2013 DE 102013109987
(43) Veröffentlichungstag der Anmeldung: 10.06.2020
(62) Teilanmeldung aus: 14747673.3
(73) Patentinhaber: Ludwig Hettich Holding GmbH & Co. KG, 78713 Schramberg-Sulgen (DE)
(72) Erfinder: Hettich, Ulrich, 78713 Schramberg (DE)
(74) Vertreter: Lucke, Andreas

(56) Entgegenhaltungen:
- WO-A1-2011/063138

## Beschreibung

### GEBIET DER ERFINDUNG

Die vorliegende Erfindung liegt auf dem Gebiet der Verankerungstechnik und umfasst einen Bolzen mit einer Wendel zum Furchen eines Gewindes.

### HINTERGRUND

Gewindeeinsätze werden zum Verbinden verschiedener Bauteile eingesetzt, wobei die Bauteile aus denselben oder aus verschiedenen Werkstoffen bestehen können. Beispiele sind Stahl-Kunststoff-, Kunststoff-Kunststoff-, Stahl-Stahl-, Stahl-Aluminium-, Aluminium-Aluminium- , Stahl-Holz-, Holz-Holz- und Holz-Beton-Verbindungen. Von besonderer praktischer Bedeutung sind Gewindeeinsätze mit selbstschneidendem Außengewinde zum Einschrauben in Mauerwerk oder Beton.

Gewindeeinsätze weisen üblicherweise ein Innengewinde und ein Außengewinde auf. Zur Herstellung einer Verbindung über einen Gewindeeinsatz wird der Gewindeeinsatz über sein Außengewinde in ein Bohrloch im zu verbindenden Bauteil oder im Werkstoff eingeschraubt. Über einen Verbindungsbolzen kann dann die Verbindung zu einem anderen Bauteil hergestellt werden, indem der Verbindungsbolzen in den Gewindeeinsatz eingeschraubt wird.

Gewindeeinsätze können bereits bei der Bauteilherstellung in das zu verbindende Bauteil eingebracht werden oder auch nachträglich, z.B. zu Reparaturzwecken, in das Bauteil eingebracht werden.

Ein Gewindeeinsatz, der ein Innengewinde und ein Außengewinde umfasst und der aus einem massiven Werkstück gefertigt ist, wird in der EP 1085 220 B1 beschrieben.

Ein anderer Gewindeeinsatz, der ebenfalls ein Innen- und ein Außengewinde aufweist, jedoch aus einem Profilband gewickelt ist, ist aus der DE 10 2007 054 798 B3 bekannt. Gegenüber anderen Gewindeeinsätzen bietet dieser gewickelte Gewindeeinsatz den Vorteil, dass er aufgrund eines geringen Material- und Fertigungsaufwands kostengünstiger herstellbar ist.

Ein Nachteil des genannten gewickelten Gewindeeinsatzes ist jedoch, dass er sich nicht optimal zum Furchen eines Gewindes eignet. Das liegt einerseits daran, dass das nötige Antriebsdrehmoment nicht ohne weiteres über das gewickelte Profilband auf einen führenden Teil des Gewindeeinsatzes, an dem das Gewinde zu furchen ist, übertragen werden kann, ohne dass sich die Profilband-Helix verwindet. Zum anderen muss das Gewindematerial zum Zwecke des Furchens eine bestimmte Härte aufweisen. Durch ein Härten wird jedoch üblicherweise auch die Sprödigkeit des Materials erhöht. Das Profilband darf jedoch nicht zu spröde sein, einerseits weil dann das Umformvermögen des Materials eingeschränkt ist, andererseits weil die Produkteigenschaften ein duktiles Verhalten des Werkstoffes erfordern. Außerdem ist die Drehmomentübertragung über ein zu sprödes Profilband, das erst nach dem Wickeln gehärtet wurde, kritisch, weil es dabei ebenfalls zum Brechen des Profilbandes kommen kann.

Ein weiterer Nachteil an der Verwendung eines härtbaren Materials für ein Profilband eines gewickelten Gewindeeinsatz ist es, dass solche Materialien nicht sehr korrosionsbeständig sind.

Die WO2011/063138 A1 offenbart ein Befestigungselement mit einem Schaft, der einen ersten Gewindeabschnitt und einen gehärteten Gewindeabschnitt aufweist. Der Schaft umfasst ein Gewinde, welches sich von dem Körper des Schaftes über eine erste Länge des Schaftes nach außen erstreckt. Ein zweiter Abschnitt des Schaftes umfasst eine Vertiefung, die in Übereinstimmung mit dem Gewinde angeordnet ist und ein Windungsverhältnis aufweist, welches dem Windungsverhältnis des Gewindes entspricht. Der Schaft besteht aus korrosionsbeständigem Edelstahl. Eine Wendel aus gehärtetem Stahl greift in die Vertiefung ein, um die Vertiefung entlang des zweiten Abschnittes zu füllen.

Der vorliegenden Erfindung liegt die Aufgabe zugrunde, einen Bolzen anzugeben, der zum Furchen eines Gewindes geeignet ist und sich kostengünstig herstellen lässt.

### ZUSAMMENFASSUNG DER ERFINDUNG

Diese Aufgabe wird durch den Bolzen nach Anspruch 1 gelöst. Vorteilhafte Weiterbildungen und Ausführungsformen sind in den abhängigen Ansprüchen angegeben.

In der vorliegenden Offenbarung wird eine Wendel zur Übertragung eines Drehmoments auf eine Gewindeeinsatz-Hülse mit einem Außengewinde und/oder zum Furchen eines Gewindes beschrieben. Die Wendel umfasst ein radial äußeres Profil, welches zur Verankerung der Wendel in einer Gewindeeinsatz-Hülse und zur Übertragung eines Drehmoments auf die Gewindeeinsatz-Hülse bestimmt ist. Zusätzlich oder alternativ kann das äußere Profil auch zum Furchen eines Gewindes bestimmt sein. Weiterhin umfasst die Wendel ein Antriebsprofil, das zur Aufnahme eines Antriebs geeignet ist, welcher derart in das Antriebsprofil eingreifen kann, dass ein Drehmoment vom Antrieb auf die Wendel übertragen werden kann und gleichzeitig eine Torsion der Wendel beschränkt oder vermeiden wird.

Bei bekannten Gewindeeinsätzen mit einer Gewindeeinsatz-Hülse wird für das Einschrauben in ein Bohrloch das Drehmoment üblicherweise an einem hinteren Ende des Gewindeeinsatzes angelegt und über die Gewindeeinsatz-Hülse auf das Außengewinde übertragen.

Im Unterschied dazu kann das Drehmoment mithilfe der beschriebenen Wendel, die im Bereich des führenden Endes der Gewindeeinsatz-Hülse verankert sein kann, direkt im Bereich des führenden Endes auf die Gewindeeinsatz-Hülse übertragen werden. Die Drehmomentübertragung kann mithilfe eines Antriebswerkzeugs vorgenommen werden, das - durch die Gewindeeinsatz-Hülse hindurch - mit einem geeigneten Antrieb in das Antriebsprofil eingreifen kann und das Drehmoment, etwa bei einem Drehen um eine Längsachse, über die Wendel auf die Gewindeeinsatz-Hülse übertragen kann.

Weil der Antrieb in das Antriebsprofil der Wendel eingreift, kann die Wendel in ihrer Form stabilisiert werden, sodass die Wendel bei der Übertragung des Drehmoments keine Torsion erfährt. Daher bleibt bei der Drehmomentübertragung auch derjenige Abschnitt der Gewindeeinsatz-Hülse formstabil, in dem die Wendel verankert ist, sodass dieser Abschnitt der Gewindeeinsatz-Hülse ebenfalls keine Torsion erfährt.

Dies ist besonders vorteilhaft bei Gewindeeinsatz-Hülsen, die nicht ausreichend rotationsstabil oder torsionsstabil sind, um ein großes Drehmoment über ihre Länge zu übertragen, beispielsweise aufgrund eines zu geringen Torsionsmoduls oder einer zu hohen Sprödigkeit. Der Grund dafür ist, dass das Drehmoment direkt - also nicht entlang der Länge der Gewindeeinsatz-Hülse - auf einen führenden Abschnitt der Gewindeeinsatz-Hülse übertragen werden kann, auf dem der zu überwindende Widerstand für das Außengewinde beim Furchen größer ist als auf einem nachfolgenden Abschnitt vergleichbarer Länge, und dass der angetriebene Abschnitt der Gewindeeinsatz-Hülse von der Wendel stabilisiert wird, die ihrerseits durch das Antriebswerkzeug gegen Torsion stabilisiert ist.

Über ihr radial äußeres Profil kann die Wendel nicht nur in der Gewindeeinsatz-Hülse verankert werden und das Drehmoment auf sie übertragen, sondern optional zusätzlich auch ein Gewinde für das nachfolgende Außengewinde der Gewindeeinsatz-Hülse in das Bohrloch furchen, in das die Gewindeeinsatz-Hülse gleichzeitig über die Wendel eingeschraubt oder "eingezogen" wird.

Dadurch können unter Verwendung der Wendel auch solche Gewindeeinsatz-Hülsen zur Verankerung verwendet werden, deren Verwendung ohne die Wendel nicht möglich wäre, weil sie durch eine Drehmomentübertragung im Bereich ihres hinteren Endes nicht in ein Bohrloch einbringbar sind. Insbesondere können kostengünstige gewickelte Gewindeeinsatz-Hülsen verwendet werden, die nur bedingt torsionsstabil sind, und die zudem auch ungehärtet und korrosionsbeständig sein können, weil das Gewinde durch das äußere Profil der Wendel gefurcht werden kann.

Weiter unten wird im Zusammenhang mit einem erfindungsgemäßen Bolzen beschrieben, dass die Wendel auch ausschließlich zum Gewindefurchen - also nicht zusätzlich zum Einbringen eines Drehmomentes in das führende Ende einer Hülse - eingesetzt werden kann.

In einem bevorzugten Beispiel ist die Wendel aus einem Materialstreifen gebildet, der helixförmig um eine Längsachse verläuft. Damit ist zur Herstellung der Wendel verhältnismäßig wenig Material erforderlich und eine kostengünstige Herstellung möglich. Um das Drehmoment sicher auf eine Gewindeeinsatz-Hülse zu übertragen und ein sicheres Gewindefurchen zu ermöglichen, entspricht die Länge des Materialstreifens vorzugsweise mindestens der Länge eines Wendelgangs und ist besonders vorzugsweise länger als die Länge eines Wendelgangs.

Das Antriebsprofil kann mehrere Aussparungen umfassen, wobei mindestens zwei Aussparungen entlang des Materialstreifens mit der Länge eines Wendelgangs voneinander beabstandet sind, sodass diese Aussparungen entlang der Längsachse fluchten. Dadurch kann ein geeigneter Antrieb entlang der Längsachse aufgenommen werden und in die fluchtenden Aussparungen eingreifen, wodurch ein Drehmoment auf die Wendel übertragen werden kann und die Wendel gleichzeitig gegenüber einer Verwindung stabilisiert bzw. "verriegelt" wird.

Um die Drehmomentübertragung auf die Gewindeeinsatz-Hülse, deren Stabilisierung und die Verankerung der Wendel in der Gewindeeinsatz-Hülse weiter zu verbessern und damit auch das Gewindefurchen zu erleichtern, kann die Wendel auch mindestens zwei Wendelgänge aufweisen. Dabei umfasst Antriebsprofil vorzugsweise mehrere Paare von Aussparungen, wobei jedes Aussparungspaar mit der Länge eines Wendelgangs voneinander beabstandet ist und entlang der Längsachse fluchtet. Dadurch kann ein entlang der Längsachse der Wendel aufgenommener Antrieb in mehrere Aussparungspaare eingreifen, wodurch die Drehmomentübertragung auf die Wendel an mehreren Positionen über einen längeren Abschnitt erfolgen kann.

Das radial äußere Profil der Wendel kann mehrere äußere Vorsprünge umfassen, beispielsweise gut zum Furchen geeignete Schneide- oder Furchzähne. Die radial äußeren Vorsprünge sind dabei entlang des Materialstreifens voneinander beabstandet und auf der Außenseite der Wendel angeordnet, von der sie sich radial nach außen erstrecken. Weil sich solche Vorsprünge radial nach außen erstrecken, können sie senkrecht zu dieser Richtung - also in Umfangsrichtung - ein Drehmoment auf die Gewindeeinsatz-Hülse übertragen.

In einer Ausführungsform ist die Wendel zumindest teilweise aus einem härtbaren Metall gebildet. Weil sich ein gehärtetes Metall weniger gut verformen oder verarbeiten lässt, kann die Wendel bei der Herstellung zunächst in die vorgesehene Form gebracht werden und anschließend gehärtet werden. Eine hohe Härte ist für das Furchen eines Gewindes von Vorteil. Weil die Wendel beim Furchen durch einen Antrieb stabilisiert ist und weil eine Torsion der Wendel vermieden wird, ist die Gefahr für ein Brechen der Wendel auch bei einer hohen Sprödigkeit der Wendel nicht gegeben oder zumindest gering.

In einer vorteilhaften Ausführungsform ist die Wendel aus einem gehärteten Metall gebildet, das eine Härte von ≥ 58 HRC, vorzugsweise von ≥ 63 HRC und besonders vorzugsweise von ≥ 67 HRC aufweist. Die Einheit HRC bezeichnet die Rockwellhärte nach ISO 6508-1(1997). Eine Stahlwendel kann beispielsweise dadurch gehärtet werden, dass der Kohlenstoffanteil im Stahl erhöht wird.

In einer anderen vorteilhaften Ausführungsform ist die Wendel aus einem Bimetall gebildet, das einen Vergütungsstahl und einen Schnellarbeitsstahl umfasst. Die Kombination der Werkstoffe hat den Vorteil, dass bei geeigneter gemeinsamer Wärmebehandlung beider Werkstoffe der Vergütungsstahl ein zähes noch unformbares Vergütungsgefüge, der Schnellarbeitsstahl jedoch noch sehr hohe Härte und Verschleißwiderstand aufweist. Ein Vergütungsstahl ist daher im Vergleich zum Schnellarbeitsstahl besser verformbar und biegbar, wohingegen der härtere Schnellarbeitsstahl besser zum Gewindefurchen geeignet ist. Der Kohlenstoffanteil eines Vergütungsstahls kann beispielsweise zwischen 0,2 und 0,7 % liegen und der Kohlenstoffanteil eines Schnellarbeitsstahls kann bis über 2 %. Vorzugsweise sind der gebogene Wendelbereich und das Antriebsprofil der Wendel zumindest teilweise aus Vergütungsstahl gebildet und das radial äußere Profil zumindest teilweise aus Schnellarbeitsstahl. Unter dem gebogenen Wendelbereich ist derjenige Bereich der Wendel zu verstehen, der zwischen dem radial äußeren Profil und dem Antriebsprofil liegt. Es ist zu beachten, dass in der vorliegenden Beschreibung ein "Bimetall" nicht nur Metalle mit ausschließlich zwei Komponenten bezeichnet, sondern auch Metalle bezeichnen soll, die aus mehr als zwei Komponenten bestehen.

Bei der Wendel kann der Durchmesser der Einhüllenden des radial äußeren Profils entlang eines Wendelabschnitts, der einem führenden Ende der Wendel benachbart ist, in Richtung auf das führende Ende der Wendel kleiner werden. Dadurch wird das Ansetzen der Wendel in einem Bohrloch vereinfacht und das Gewindefurchen erleichtert. Vorzugsweise hat der genannte Abschnitt mindestens die Länge eines halben, und besonders vorzugsweise mindestens die Länge eines ganzen Wendelganges.

Das Antriebsprofil kann die Form eines Innensechsrundes, eines Innenvielkants oder eines Innenpolygons aufweisen, sodass die Wendel herkömmliche Antriebsgeometrien aufnehmen kann und durch diese angetrieben werden kann.

Die vorliegende Offenbarung umfasst weiterhin einen Gewindeeinsatz, der eine Wendel nach einer der zuvor genannten Beispiele und eine Gewindeeinsatz-Hülse umfasst. Die Gewindeeinsatz-Hülse umfasst ein Außengewinde, mit dem der Gewindeeinsatz in ein Bohrloch eingeschraubt werden kann. Die Wendel ist über ihr radial äußeres Profil mit der Gewindeeinsatz-Hülse formschlüssig verbunden, sodass ein über das Antriebsprofil auf die Wendel übertragenes Drehmoment auf die Gewindeeinsatz-Hülse übertragen wird. Die Wendel ist zumindest teilweise in der führenden Hälfte und vorzugsweise am führenden Ende der Gewindeeinsatz-Hülse angeordnet, sodass das Drehmoment zumindest teilweise in der führenden Hälfte und vorzugsweise am führenden Ende der Gewindeeinsatz-Hülse auf die Gewindeeinsatz-Hülse übertragen wird.

Vorzugsweise kann in der Gewindeeinsatz-Hülse ein Verankerungsbolzen verankert werden, beispielsweise in ein in der Gewindeeinsatz-Hülse vorgesehenen Innengewinde eingeschraubt werden. Weil der beschriebene Gewindeeinsatz nicht notwendigerweise über sein hinteres Ende angetrieben werden muss, sondern über sein führendes Ende angetrieben werden kann, ist es möglich, den Gewindeeinsatz über seinen angetriebenen führenden Abschnitt gewissermaßen in das Bohrloch "einzuziehen". Im angetriebenen führenden Abschnitt kann über das äußere Profil der Wendel und/oder über den durch die Wendel stabilisierten und gewissermaßen "geschienten" angetriebenen Abschnitt der Gewindeeinsatz-Hülse ein Gewinde für den nachfolgenden nicht stabilisierten Abschnitt der Gewindeeinsatz-Hülse in ein Bohrloch gefurcht werden.

Der beschriebene Gewindeeinsatz bietet den Vorteil, dass für ihn kostengünstige und korrosionsbeständige Gewindeeinsatz-Hülsen verwendet werden können, die aus vergleichsweise wenig Material gefertigt sein können und für die das Einschrauben aufgrund der Wendel erheblich erleichtert oder überhaupt erst ermöglicht wird.

Das radial äußere Profil der Wendel, welches das Drehmoment auf die Gewindeeinsatz-Hülse überträgt, kann die Gewindeeinsatz-Hülse durchstoßen und Abschnitte des Außengewindes bilden. Mit diesen durch die Wendel gebildeten Außengewindeabschnitten kann ein Gewinde gefurcht werden, in welches das nachfolgende Außengewinde der Gewindeeinsatz-Hülse beim Einschrauben des Gewindeeinsatzes eingezogen wird und eingreift.

Bei dem beschriebenen Gewindeeinsatz kann die formschlüssige Verbindung zwischen der Wendel und der Gewindeeinsatz-Hülse auch kraft- und/oder stoffschlüssig sein.

Die Gewindeeinsatz-Hülse und die Wendel müssen nicht notwendigerweise aus dem gleichen Material bestehen, sondern können zumindest teilweise auch aus unterschiedlichen Materialien gebildet sein. Beispielsweise kann die Gewindeeinsatz-Hülse aus einem korrosionsbeständigen Material gebildet sein, insbesondere aus rostfreiem Stahl. Üblicherweise lassen sich korrosionsbeständige Materialien schlecht härten, sodass sich solche Materialien nicht zum Furchen eines Gewindes eignen. Aufgrund der Kombination mit einer gehärteten Wendel kann der Gewindeeinsatz selbstfurchend in ein Bohrloch eingeschraubt werden, ohne dass die Gewindeeinsatz-Hülse selbst zum Furchen geeignet sein muss, wobei die Gewindeeinsatz-Hülse insbesondere auch korrosionsbeständig sein kann. Dadurch kann mithilfe des Gewindeeinsatzes eine zuverlässige und günstige Langzeitverankerung eines Verankerungsbolzens ohne zusätzlichen Korrosionsschutz, beispielsweise durch Abdichten des Bohrloches oder dergleichen, zur Verfügung gestellt werden. Die Gewindeeinsatz-Hülse kann aber auch zumindest teilweise, vorzugsweise überwiegend aus Kunststoff bestehen.

In einem besonders vorteilhaften Beispiel umfasst die Gewindeeinsatz-Hülse ein gewickeltes Profilband, das auf einer Seite mit dem Profil des Außengewindes und auf der anderen Seite mit dem Profil eines Innengewindes vorgeformt ist. Ein solcher Gewindeeinsatz mit einer Wendel und einem gewickelten Profilband erfordert einerseits wenig Material zur Herstellung und ist mit vergleichsweise geringem Fertigungsaufwand herstellbar. Bei einem solchen Gewindeeinsatz kann die Wendel ein Gewinde für das gewickelte Profilband in das Bohrloch furchen und über das führende Ende des Gewindeeinsatzes das Außengewinde des gewickelten Profilbandes in das gefurchte Gewinde ein- oder nachziehen. Damit wird ein Einsetzen einer aus einem Profilband gewickelten Gewindeeinsatz-Hülse in ein gewindeloses Bohrloch wesentlich erleichtert oder ermöglicht.

In einer vorteilhaften Weiterbildung dieses Gewindeeinsatzes entspricht die Wendelsteigung der Wendel zumindest näherungsweise der Wickelsteigung des Profilbandes. Dadurch wird das Drehmoment zumindest teilweise entlang des Profilbandes übertragen und das Einschrauben erleichtert. Vorzugsweise entspricht die Wickelsteigung des Profilbandes auch zumindest näherungsweise der Steigung des Außengewindes, sodass das Drehmoment zusätzlich zumindest teilweise entlang des Außengewindeprofils übertragen wird, wodurch das Einziehen weiter erleichtert werden kann.

In einer vorteilhaften Weiterbildung hat die Gewindeeinsatz-Hülse einen Kopfabschnitt, der über den Rest der Gewindeeinsatz-Hülse radial vorstellt. Mit Hilfe des Kopfabschnittes kann der Gewindeeinsatz beispielsweise dazu verwendet werden, bestimmte Bauteile an anderen Bauteilen zu befestigen, beispielsweise Dämmmaterialplatten an einer Betonwand oder Betondecke. Man beachte, dass der Begriff "Gewindeeinsatz" im Rahmen der vorliegenden Offenbarung nicht suggerieren soll, dass er über seine ganze Länge in einen Untergrund, beispielsweise Beton, eingebracht werden soll.

In einem anderen vorteilhaften Beispiel umfasst die Gewindeeinsatz-Hülse eine Kunststoffhülse oder wird durch eine Kunststoffhülse gebildet, wobei die Wendel mit dem Kunststoff der Gewindeeinsatz-Hülse umspritzt sein kann. Zur Verankerung eines Verankerungsbolzens in der Kunststoff-Gewindeeinsatz-Hülse kann die Gewindeeinsatz-Hülse ein Innengewinde umfassen, in das der Verankerungsbolzen eingeschraubt wird. Alternativ kann die Gewindeeinsatz-Hülse auch eine gewindelose Innenwand, insbesondere eine glatte Innenwand, aufweisen, sodass ein Verankerungsbolzen für seine Verankerung in der Gewindeeinsatz-Hülse ein Gewinde in die Gewindeeinsatz-Hülse furchen kann.

Eine derartige Gewindeeinsatz-Hülse aus Kunststoff kann dann mit Hilfe eines Werkzeuges eingeschraubt werden, welches durch einen Hohlraum der Hülse eingeführt und durch das Antriebsprofil der Wendel aufgenommen wird.

Alternativ hierzu ist jedoch in einer vorteilhaften Weiterbildung ein Antriebselement dauerhaft in der Gewindeeinsatz-Hülse angeordnet. Dabei weist das Antriebselement an einem einem führenden Ende nahen Abschnitt ein erstes Profil auf, welches mit dem Antriebsprofil der Wendel in Eingriff steht, und an einem einem hinteren Ende nahen Abschnitt ein zweites Profil auf, dass mit einem Antriebswerkzeug in Eingriff bringbar ist. Dabei kann das zweite Profil von Kunststoff umgeben, insbesondere von Kunststoff umspritzt sein.

Eine Ausführungsform mit einem dauerhaft in der Gewindeeinsatz-Hülse angeordneten Antriebselement hat unter anderem den Vorteil, dass die Montage erleichtert wird und dass der Gewindeeinsatz dann nicht mehr von außen für ein Werkzeug zugängig sein muss.

Das dauerhaft in der Gewindeeinsatz-Hülse angeordnete Antriebselement kann überwiegend aus einem metallischen Werkstoff bestellen, der eine Drehmomentübertragung auf die Wendel gestattet und der Kunststoffhülse zudem eine erhöhte Zugfestigkeit verleiht. Anschaulich gesprochen kann ein derartiges Antriebselement die Kunststoffhülse "armieren".

Allerdings hat ein derartiges metallischen Antriebselement den Nachteil, dass es aufgrund seiner Materialkosten die Kosten des Gewindeeinsatzes, insbesondere bei längeren Gewindeeinsätzen, die 20, 30 oder gar 40 cm übersteigen können und beispielsweise zur Befestigung von Aufdachdämmung oder dergleichen einsetzbar sind. In einer vorteilhaften Weiterbildung besteht das Antriebselement daher aus einem armierten Kunststoff, insbesondere einem mit Kurz- oder Langfasern armierten Kunststoff. Dabei können die Fasern insbesondere durch Kohlefasern oder Glasfasern gebildet sein. Durch die Armierung erhält der Kunststoff eine Festigkeit, die für viele Anwendungen ausreichen wird.

In einem vorteilhaften Beispiel steht das zweite Profil über den Kopfabschnitt hervor. Auf diese Weise ist es einfach, mit einem Antriebswerkzeug am zweiten Profil anzugreifen. Allerdings kann ein derartiges über den Kopfabschnitt vorstehendes zweites Profil unter praktischen oder auch ästhetischen Gesichtspunkten störend sein. In einem alternativen Beispiel weist daher der Kopfabschnitt eine Aussparung auf, in der das zweite Profil des Antriebselements angeordnet ist. Vorzugsweise ist die Aussparung dabei so groß, dass sie gestattet, dass das zweite Profil mit einem Antriebswerkzeug in Eingriff gebracht wird. Dies wird anhand eines Beispiels unten näher erläutert.

Die vorliegende Offenbarung umfasst weiterhin einen Bolzen mit einem Gewindeabschnitt, der ein Gewinde mit einem Gewindeaußendurchmesser umfasst, und mit einem Antriebsabschnitt zur Aufnahme durch das Antriebsprofil einer Wendel nach einer der zuvor beschriebenen Ausführungsformen. Der Antriebsabschnitt des Bolzens befindet sich näher an einem führenden Ende des Bolzens als der Gewindeabschnitt und umfasst mindestens ein radial nach außen vorstehendes Antriebsmittel, das geeignet ist, in das Antriebsprofil der Wendel einzugreifen.

Ein solcher Bolzen kann derart mit der beschriebenen Wendel verwendet werden, dass die Wendel den Antriebsabschnitt des Bolzens aufnimmt und der Bolzen über den Antriebsabschnitt ein Drehmoment auf die Wendel überträgt. Die Wendel kann damit beim Einsetzen des Bolzens in ein Bohrloch zum Furchen eines Gewindes verwendet werden, in welches das Bolzengewinde eingeschraubt werden kann. Dadurch kann für den Bolzen ein Material gewählt werden, das nicht notwendigerweise zum Furchen eines Gewindes geeignet sein muss und korrosionsbeständig sein kann. Insbesondere kann der Bolzen aus rostfreiem Stahl gefertigt sein.

Es wird darauf hingewiesen, dass die Eignung zum Furchen in der vorliegenden Beschreibung keine feststehende, absolute Material- oder Vorrichtungseigenschaft bezeichnet, sondern eine Eigenschaft, die auch von der Beschaffenheit des Materials, in welches das Bohrloch eingebracht ist, und von der Geometrie des Bohrloches abhängig sein kann.

Vorzugsweise ist bei dem Bolzen der Gewindeaußendurchmesser des Gewindes größer als der Durchmesser der Einhüllenden des Antriebsabschnitts. Die Differenz kann durch die beschriebene Wendel überbrückt werden, wenn diese den Antriebsabschnitt des Bolzens aufnimmt, sodass das gefurchte Gewinde einen Außendurchmesser aufweist, der zumindest nicht wesentlich größer als der Gewindeaußendurchmesser des Bolzengewindes ist.

In einer Weiterbildung des beschriebenen Bolzens umfasst der Bolzen weiterhin eine hierin beschriebene Wendel, wobei der Antriebsabschnitt kraftschlüssig mit der Wendel verbunden ist und die Wendelsteigung der Wendel zumindest näherungsweise der Gewindesteigung auf dem Gewindeabschnitt entspricht. Das radial äußere Profil der Wendel ist zumindest abschnittsweise mit einem gedachten, in Richtung auf das führende Ende des Bolzens fortgesetzten Gewinde des Bolzens überlagert.

Die vorliegende Erfindung betrifft einen Bolzen mit einem als Kraftangriff ausgebildeten Kopf und einem Schaftabschnitt, an dem ein Gewinde ausgebildet ist, wobei der Bolzen als Spritzgussteil, insbesondere als Kunststoffspritzgussteil ausgebildet ist. Der Bolzen weist im Bereich seines führenden Endes eine Wendel auf, die ein radial äußeres Profil hat, das zum Furchen eines Gewindes ausgebildet ist. Dabei ist die Wendel derart von dem Material des Schaftes des Bolzens umspritzt, dass das radial äußere Profil zumindest abschnittsweise radial über dem Schaftabschnitt vorsteht und auf einer gedachten periodischen Fortsetzung des Bolzengewindes angeordnet ist.

Die Wendel kann dabei sämtliche oben genannten Merkmale einzeln oder in Kombination aufweisen. Da die Wendel jedoch in den Bolzen eingespritzt ist und der Bolzen einen als Kraftangriff ausgebildeten Kopf aufweist, ist es in dieser Ausführungsform nicht nötig, dass die Wendel ein Antriebsprofil zur Aufnahme eines Antriebs aufweist.

Schließlich umfasst die vorliegende Offenbarung ein Verfahren zur Herstellung einer Wendel nach einer der vorgenannten Beispiele. Das Verfahren umfasst das Bereitstellen eines Materialstreifens mit einer ersten Seitenfläche und einer gegenüberliegenden zweiten Seitenfläche, wobei die erste Seitenfläche mehrere Aussparungen und die zweite Seitenfläche mehrere Vorsprünge aufweist und wobei die Aussparungen und/oder die Vorsprünge mit der Neigung einer zu wickelnden Wendelsteigung in den Materialstreifen eingebracht sind. Weiterhin umfasst das Verfahren ein Wickeln des bereitgestellten Materialstreifens mit der zu wickelnden Wendelsteigung zu einer Wendel.

Dadurch, dass die Aussparungen und/oder Vorsprünge mit der Neigung der zu wickelnden Wendelsteigung in den Materialstreifen eingebracht sind, verlaufen die Aussparungen und/oder die Vorsprünge bei der gewickelten Wendel parallel zu einer Längsachse oder einer gedachten Wendelachse, um welche der gewickelte Materialstreifen verläuft.

Dadurch kann die Seitenfläche im Bereich der Aussparungen gleichmäßig an einem Antrieb oder einem Antriebswerkzeug anliegen, das entlang der Längsachse der Wendel in die Wendel eingeführt ist. Außerdem können dadurch beim gewickelten Materialstreifen die Vorsprünge oder Furchzähne in Längsrichtung parallel zur Längsachse verlaufen, sodass furchende Kanten oder Flächen beim Gewindefurchen gleichmäßig in die Innenwand des Bohrloches furchen.

### KURZBESCHREIBUNG DER FIGUREN

In der folgenden Beschreibung wird die Erfindung beispielhaft anhand bevorzugter Ausführungsformen unter Bezugnahme auf die beigefügten Zeichnungen näher erläutert, in denen
- Figur 1: eine Perspektivansicht einer Wendel zeigt,
- Figur 2: eine Draufsicht auf die Wendel aus Figur 1 zeigt,
- Figur 3: ein Profilband mit einem vorgeformten Innengewinde und einen Abschnitt der Wendel aus Figur 1 zeigt,
- Figur 4: einen Abschnitt eines Gewindeeinsatzes zeigt, der ein gewickeltes Profilband und die Wendel aus Figur 1 umfasst,
- Figur 5: einen Längsschnitt durch den Gewindeeinsatz aus Figur 4 zeigt,
- Figur 6: eine Draufsicht auf den Gewindeeinsatz aus Figur 4 zeigt,
- Figur 7: einen Bolzen zeigt, der an einem Antriebsabschnitt eine Wendel umfasst,
- Figur 8: einen Materialstreifen zeigt, aus dem eine Wendel hergestellt werden kann, deren Einhüllende einen Durchmesser hat, der auf einem führenden Abschnitt der Wendel in Richtung auf ein führendes Ende der Wendel abnimmt,
- Figur 9: einen Materialstreifen zur Herstellung einer Wendel zeigt, wobei der Materialstreifen mehrere Vorsprünge aufweist, die mit einer Neigung in den Materialstreifen eingebracht sind;
- Figur 10: eine Seitenansicht, einen Längsschnitt und eine Draufsicht eines Gewindeeinsatzes aus Kunststoff zeigt;
- Figur 11: eine Seitenansicht, einen Längsschnitt, einen Querschnitt und eine Draufsicht auf einen weiteren Gewindeeinsatz aus Kunststoff zeigt, der ein dauerhaft in einer Kunststoffhülse angeordnetes Antriebselement aufweist,
- Figur 12: einen Gewindeabsatz zeigt, der dem Gewindeeinsatz von Figur 11 ähnelt, bei dem jedoch das zweite Profil des Antriebselements in einer Aussparung im Kopfabschnitt angeordnet ist, und
- Figur 13: eine Seitenansicht, einen Längsschnitt und eine Draufsicht auf einen erfindungsgemäßen Kunststoffbolzen zeigt, in den eine Wendel eingespritzt ist.

In der folgenden Beschreibung werden für gleiche Elemente gleiche Bezugszeichenverwendet.

### AUSFÜHRLICHE BESCHREIBUNG BEVORZUGTER AUSFÜHRUNGSFORMEN

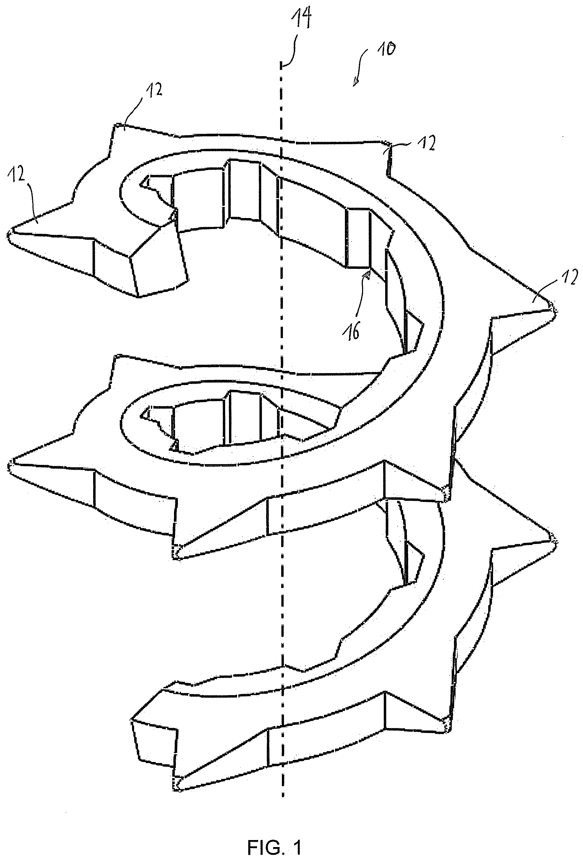

Figur 1 zeigt eine Perspektivansicht einer Wendel 10. Die Wendel 10 umfasst ein radial äußeres Profil, das mehrere radial äußere Vorsprünge 12 aufweist. Die Wendel 10 verläuft um eine gedachte Längs- oder Wendelachse 14 und weist ein Antriebsprofil auf, das mehrere Aussparungen 16 umfasst. Die in Figur 1 gezeigte Wendel 10 umfasst zwei Wendelgänge, wobei das Antriebsprofil auf der Länge eines Wendelganges sechs Aussparungen 16 enthält.

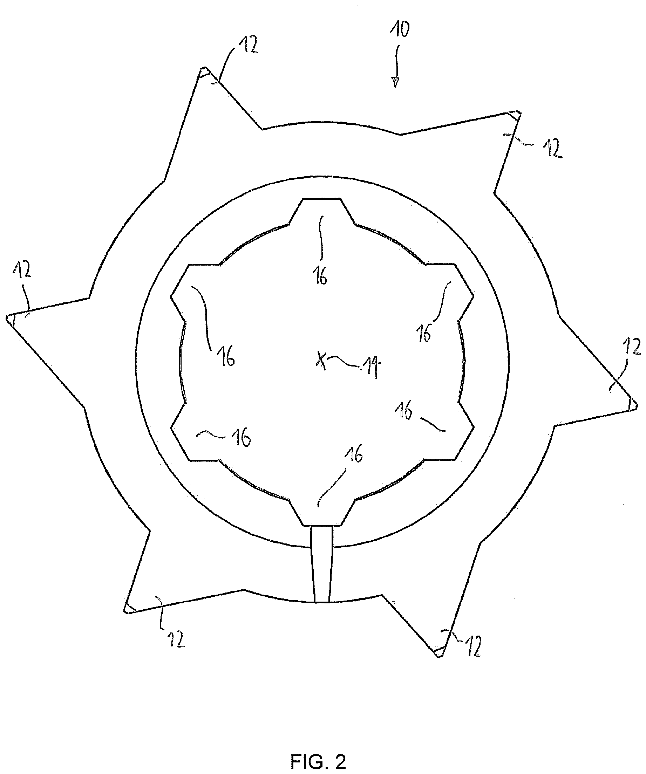

Figur 2 zeigt eine Draufsicht entlang der Wendelachse 14 auf die Wendel 10 aus Figur 1. Die Aussparungen 16 sind mit der Länge eines Wendelganges entlang eines Materialstreifens, der die Wendel 10 bildet, beabstandet und fluchten in Richtung der Wendelachse 14, wie in Figur 2 zu erkennen ist. Dadurch kann die Wendel 10 einen Antrieb (nicht gezeigt) eines Antriebswerkzeugs in Richtung der Wendelachse 14 aufnehmen, wobei der Antrieb in die Aussparungen 16 eingreift und bei einer Drehung um die Wendelachse 14 ein Drehmoment auf die Wendel 10 übertragen kann. Anhand der Figur 2 ist zu erkennen, dass bei einem Eingriff eines Antriebs in alle sechs Paare von fluchtenden Aussparungen 16 eine Torsion oder Formänderung der Wendel vermieden oder zumindest beschränkt wird.

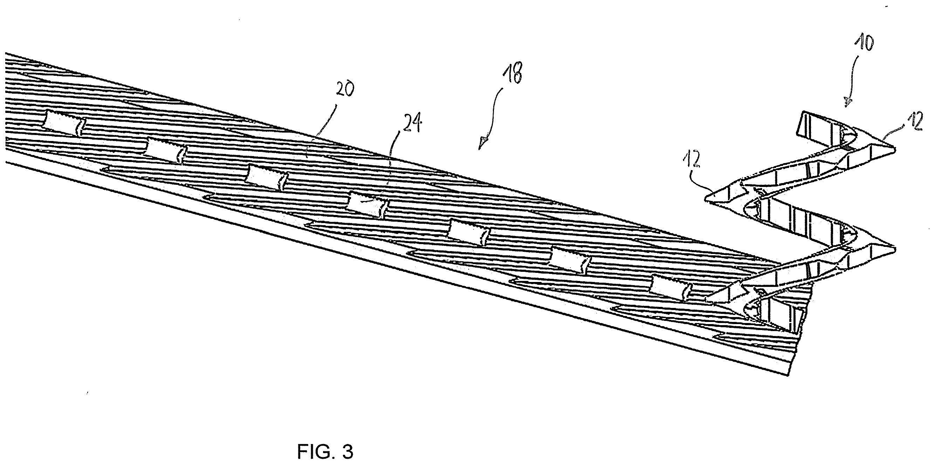

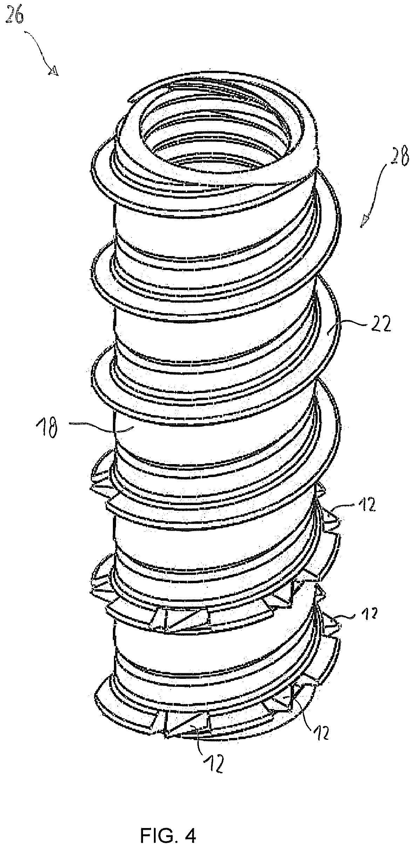

Figur 3 zeigt ein Profilband 18, das zur Herstellung eines Gewindeeinsatzes um die Wendel 10 der Figuren 1 und 2 gewickelt werden kann. Das Profilband 18 ist auf einer Innenseite mit dem Profil 20 eines Innengewindes und auf einer gegenüberliegenden äußeren Seite mit dem Profil 22 (vgl. Figur 4) eines Außengewindes vorgeformt. Das Profilband 18 kann Durchgangsöffnungen 24 umfassen, an welchen das Profilband 18 beim Aufwickeln auf die Wendel 10 von ihren radial äußeren Vorsprüngen 12 durchstoßen wird.

Figur 4 zeigt einen Gewindeeinsatz 26, zu dessen Herstellung das Profilband 18 aus Figur 3 um die Wendel 10 der Figuren 1 und 2 gewickelt wurde. Es ist zu erkennen, dass die radial äußeren Vorsprünge 12 der Wendel 10 das Profilband 18 durchstoßen und einen Teil des Außengewindes 28 des Gewindeeinsatzes 26 bilden.

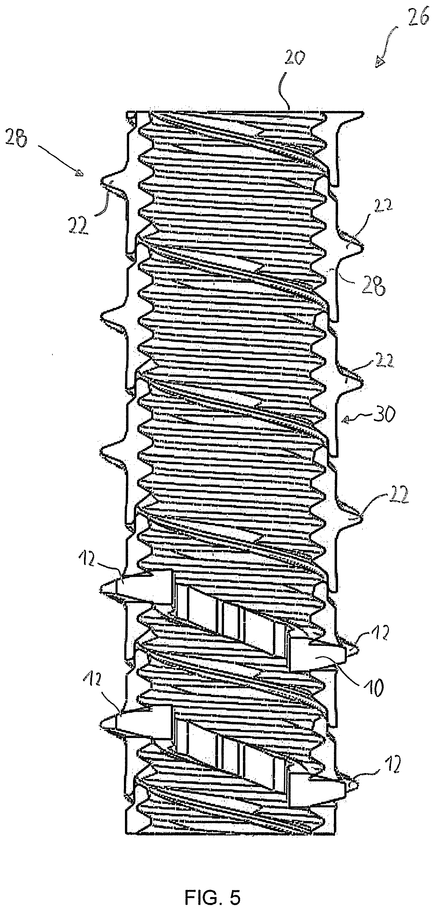

Figur 5 zeigt einen Längsschnitt durch den Gewindeeinsatz 26 aus Figur 4, der eine Gewindeeinsatz-Hülse 30 umfasst, die aus dem gewickelten Profilband 18 gebildet bzw. fortgesetzt ist, und der die Wendel 10 umfasst. Es ist zu erkennen, dass die Wickelsteigung des Profilbandes 18 in Figur 5 der Wendelsteigung entspricht und die Durchgangsöffnungen 24 jeweils im Bereich des Profils des Außengewindes vorgesehen sind, sodass das Außengewinde in diesem Bereich durch die radial äußeren Vorsprünge 12 gebildet bzw. fortgesetzt wird. Dadurch, dass die Wendelsteigung der Wickelsteigung entspricht und die radial äußeren Vorsprünge 12 das Profilband im Bereich der äußeren Gewindeflanke durchstoßen, kann das Drehmoment effektiv von der Wendel 10 auf das Außengewinde 28 der Gewindeeinsatz-Hülse 30 übertragen werden.

Bei dem Gewindeeinsatz 26 entspricht die Steigung des Außengewindes 28 der Wickelsteigung des Profilbandes, sodass die Außengewindeflanke nahtlos entlang des Außengewindes 28 und nicht über einen sich aufgrund der Wicklung ergebenden Übergang an einer seitlichen Profilbandkante verläuft. In Figur 5 ist weiterhin zu sehen, dass das Innengewinde der Gewindeeinsatz-Hülse 30 eine andere Steigung als das Außengewinde haben kann.

Da sich die Wendel 10, wie in Figur 5 gezeigt, an einem führenden Ende (unten in Figur 5) der Gewindeeinsatz-Hülse 30 befindet, wird die Gewindeeinsatz-Hülse beim Einbringen in ein Bohrloch vom führenden Ende her in das Bohrloch gezogen. Das Innengewinde der Gewindeeinsatz-Hülse 30, das sich in Richtung des hinteren Endes der Gewindeeinsatz-Hülse 30 von der Wendel 10 befindet (oben in Figur 5) kann für eine Verankerung eines Verankerungsbolzens verwendet werden, der in diesen Gewindeabschnitt eingeschraubt werden kann.

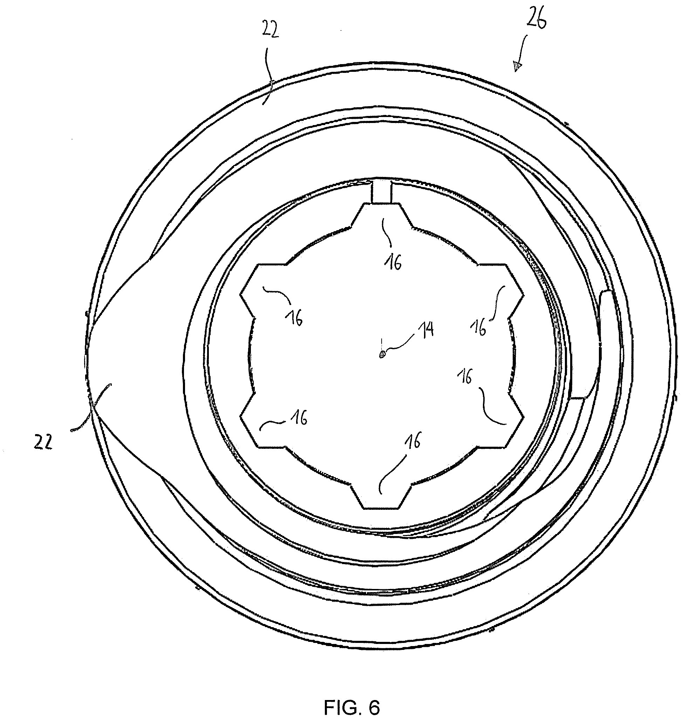

Figur 6 zeigt eine Draufsicht in Richtung der Wendelachse 14 auf den Gewindeeinsatz 26 der Figuren 4 und 5.

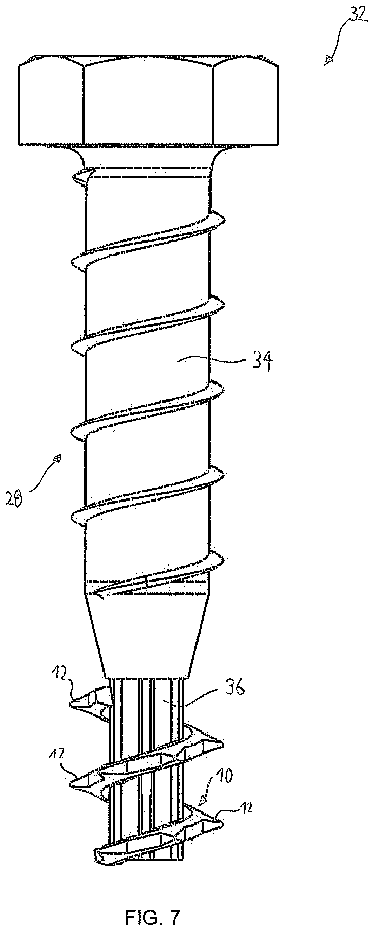

Figur 7 zeigt einen nicht-erfindungsgemäßen Bolzen 32, der einen Gewindeabschnitt 34 mit einem Außengewinde 28 und an einem Antriebsabschnitt 36 eine Wendel 10 umfasst. Die Steigung der Wendel 10 entspricht der Steigung des Außengewindes 28 auf dem Gewindeabschnitt 34. Die radial äu-βeren Vorsprünge 12 der Wendel 10 sind mit einer gedachten periodischen Fortsetzung des Außengewindes 28 in Richtung auf das führende Ende des Bolzens überlagert, sodass die Wendel 10 für das nachfolgende Außengewinde 28 des Bolzens 32 ein Gewinde furchen kann, das dem Außengewinde 28 beim Einschrauben des Bolzens 32 kaum Widerstand bietet und in das das Außengewinde 28 eingreifen kann.

Dadurch kann für denjenigen Teil des Bolzens 32, der nicht die Wendel 10 umfasst, ein nicht zum Furchen geeignetes Material, insbesondere ein nicht gehärtetes und/oder korrosionsbeständiges Material, verwendet werden, das über ein durch die Wendel 10 gefurchtes Gewinde in einem Bohrloch verankert werden kann.

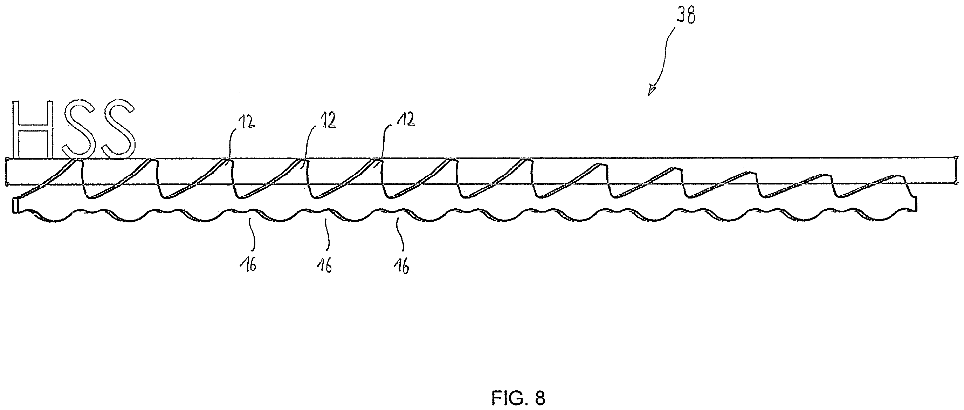

Figur 8 zeigt einen Materialstreifen 38, der zur Herstellung einer Wendel 10 verwendet werden kann, wozu der Materialstreifen 38 um eine gedachte Wendelachse 14 gewickelt wird. In Figur 8 ist zu erkennen, dass die Höhe der Vorsprünge 12 in eine Richtung des Materialstreifens 38 abnimmt. Diese Richtung entspricht bei der fertiggestellten Wendel 10 dem führenden Ende der Wendel 10, sodass der Durchmesser der Einhüllenden der aus dem Materialstreifen 38 hergestellten Wendel in Richtung auf das führende Ende der Wendel abnimmt. Eine solche Wendel 10 erleichtert das Ansetzen in einem Bohrloch und vereinfacht das Gewindefurchen. Der in Fig. durch Linien gekennzeichnete Bereich aus dem Materialstreifen 38 besteht hierbei aus Schnellarbeitsstahl (HSS, High Speed Steel). Der übrige Teil des Materialstreifens kann beispielsweise aus nichtrostendem Stahl bestehen.

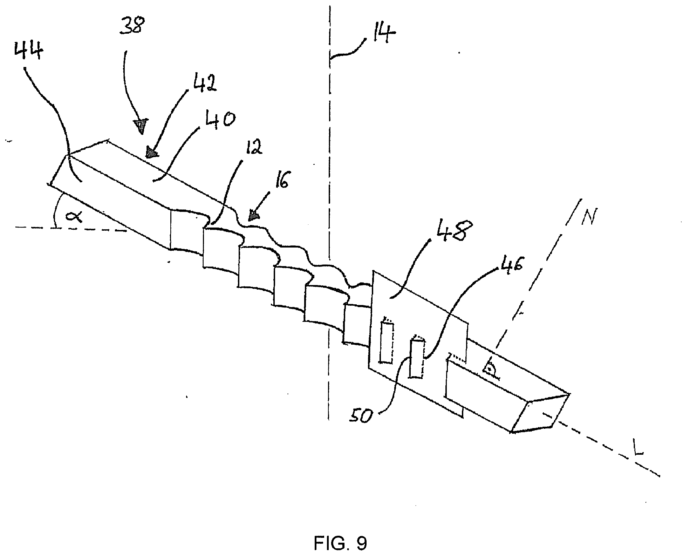

Im Folgenden wird anhand der Figur 9 ein Verfahren zur Herstellung einer Wendel 10 gemäß einer Ausführungsform näher erläutert.

Das Verfahren umfasst ein Bereitstellen eines Materialstreifens 38, der in Figur 9 gezeigt ist. Der Materialstreifen 38 erstreckt sich in eine Längsrichtung L und weist eine obere Fläche 40 und eine gegenüberliegende untere Fläche auf, wobei die Flächennormale N der oberen Fläche 40 zumindest näherungsweise senkrecht zur Längsrichtung L steht. Der Materialstreifen 38 weist außerdem eine erste Seitenfläche 42 und eine gegenüberliegende zweite Seitenfläche 44 auf, wobei die erste Seitenfläche 42 mehrere Aussparungen 16 und die zweite Seitenfläche 44 mehrere Vorsprünge 12 enthält. Die Aussparungen und/oder die Vorsprünge sind mit der Neigung einer zu wickelnden Wendelsteigung in den Materialstreifen 38 eingebracht. Die zu wickelnde Wendelsteigung, mit welcher der Materialstreifen 38 um die gedachte Wendelachse 14 gewickelt wird, ist in Figur 9 durch den Winkel α gekennzeichnet, welcher der Neigung zwischen der Wendelachse 14 und der Flächennormalen N entspricht.

Mit anderen Worten sind die gedachten Schnittlinien 46 eines Schnitts zwischen der ersten Seitenfläche 42 und/oder der zweiten Seitenfläche 44 mit einer gedachten Schnittebene 48, die durch die Längsrichtung L und die Flächennormale N aufgespannt ist, mit einer Neigung, die zumindest näherungsweise der zu wickelnden Wendelsteigung α entspricht, zu der Flächennormalen N geneigt.

Das Verfahren umfasst weiterhin ein Wickeln des bereitgestellten Materialstreifens 38 mit der zu wickelnden Wendelsteigung α um eine gedachte Wendelachse 14 zu einer Wendel 10.

Aufgrund der geneigten Einbringung der Ausbuchtungen 16 verläuft die erste Seitenfläche 42 beim Antriebsprofil in Längsrichtung der Wendel 10 parallel zur Wendelachse 14. Dadurch kann für die Wendel 10 ein Antrieb verwendet werden, dessen Antriebsmittel parallel zur einer Längsrichtung verlaufen, wobei dieser Antrieb derart in Richtung der Wendelachse 14 in das Antriebsprofil der Wendel 10 aufgenommen werden kann, dass die Antriebsmittel gleichmäßig an der ersten Seitenfläche 42 des zur Wendel 10 gewickelten Materialstreifens 38 anliegen. Dies verbessert die Stabilisierung der Wendel 10 und die Drehmomentübertragung.

Aufgrund der geneigten Einbringung der Vorsprünge 12 verläuft die zweite Seitenfläche 44 in Längsrichtung der Wendel 10 parallel zur Wendelachse 14. Dadurch kann erreicht werden, dass sich die radial äußeren Vorsprünge 12 senkrecht zur Wendelachse 14, und nicht mit der Wendelsteigung α zu dieser geneigt, radial nach außen erstrecken, so dass das Gewinde nicht schräg sondern senkrecht zur Wand des Bohrlochs und gleichmäßig über die dann parallel zur Wendelachse 14 verlaufenden Furchkanten 50 gefurcht wird.

Anders als in Figur 9 dargestellt, können die radial äußeren Vorsprünge 12 auch in radialer Richtung zugespitzt verlaufen, beispielsweise wie in Figur 1 dargestellt. In diesem Fall haben die radial äußeren Vorsprünge 12 keine Furchkanten 50, sondern Furchspitzen.

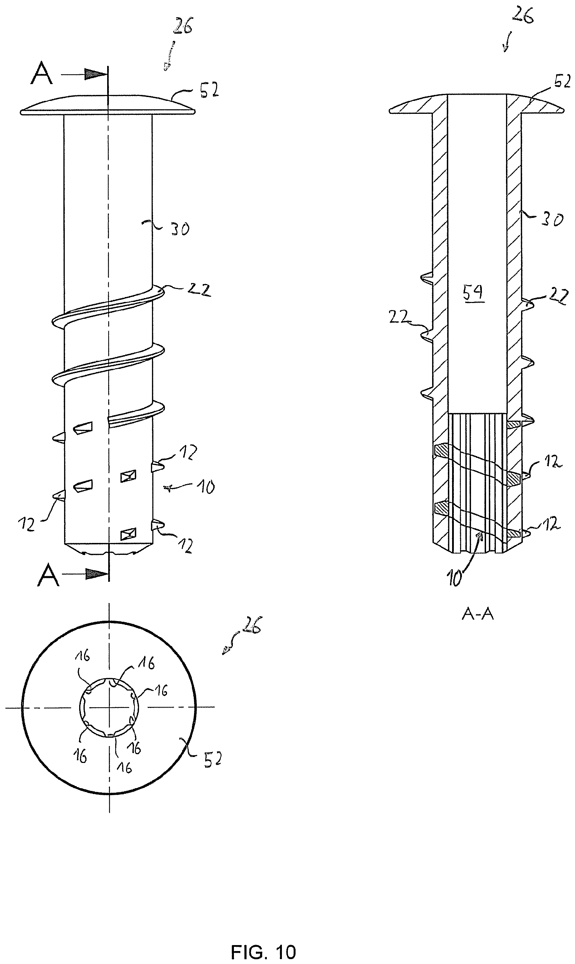

Figur 10 zeigt eine Seitenansicht, einen Längsschnitt und eine Draufsicht auf einen Gewindeeinsatz 26, bei dem die Gewindeeinsatz-Hülse 30 aus Kunststoff besteht. An einem in der Darstellung von Figur 10 oberen, d. h. hinteren Ende der Gewindeeinsatz-Hülse 30 ist ein Kopfabschnitt 52 angeordnet. Eine Wendel 10 von der Art wie sie in Figur 1 dargestellt ist, ist an einem in der Darstellung unteren, d. h. führenden Ende in die Kunststoffhülse 30 eingespritzt. Die Gewindeeinsatz-Hülse 30 weist ein Außengewinde 22 auf, welches ebenfalls aus Kunststoff besteht und integral mit der Hülse 30 ausgebildet ist. In der gezeigten Ausführungsform verläuft das Außengewinde 22 nur über einen Teil der Länge der Gewindeeinsatz-Hülse 30. Die Vorsprünge 12 der Wendel 10 liegen dabei auf einer gedachten periodischen Fortsetzung des Gewindes 22. In einer alternativen Ausführungsform kann das Außengewinde auch zwischen den Spitzen des radial äußeren Profils 12 der Wendel 10 verlaufen (nicht gezeigt) und nur durch die Spitzen des radial äußeren Profils 12 der Wendel 10 unterbrochen sein, ähnlich wie dies bei dem Gewindeeinsatz 26 von Fig. 4 und 5 der Fall ist. Auch dies wäre ein Fall, in dem die Profilspitzen 12 auf der "periodischen Fortsetzung" des Gewindes 22 lägen. Tatsächlich wäre dies aufgrund der erhöhten Tragfähigkeit des Verbundes eine bevorzugte Variante, die jedoch aufgrund der Übersichtlichkeit der Darstellung in Fig. 10 bis 13 nicht gezeigt ist.

Die Gewindeeinsatz-Hülse 30 hat einen Hohlraum 24, durch welchen ein Antriebswerkzeug (nicht gezeigt) eingeführt und in dem Antriebsprofil der Wendel 10 aufgenommen werden kann, sodass der Gewindeeinsatz 26 in einen Untergrund eingeschraubt werden kann, wobei die Vorsprünge 12 ein Gewinde furchen. In der Draufsicht von Fig. 10 sind die Aussparungen 16 zu erkennen, die das Antriebsprofil der Wendel 10 bilden.

Der Gewindeeinsatz 26 von Figur 10 kann beispielsweise dazu verwendet werden, Aufdachdämmungen oder dergleichen auf einem Untergrund, beispielsweise einem Betonuntergrund zu befestigen. Die Kunststoffhülse 30 kann kostengünstig, auch in großen Längen hergestellt werden, beispielsweise in Längen von 30 cm, 40 cm, 50 cm oder darüber hinaus. Man beachte, dass der Gewindeeinsatz 26 von Figur 10 nur mit seinem führenden Abschnitt, nämlich mit dem Abschnitt auf dem das Gewinde 22 ausgebildet ist, in den zugehörigen Untergrund einzuschrauben ist. Der Begriff "Gewindeeinsatz" ist in der vorliegenden Offenbarung daher weit zu verstehen und soll nicht suggerieren, dass der "Einsatz" über seine gesamte Länge in den Untergrund eingesetzt ist.

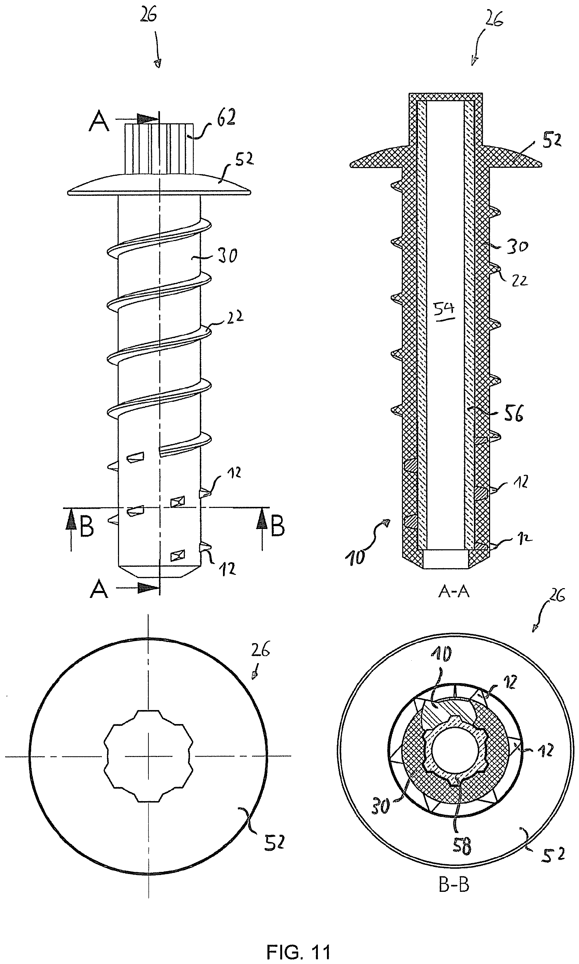

Figur 11 zeigt einen weiteren Gewinde-Einsatz 26 mit einer Gewindeeinsatz-Hülse 30 aus Kunststoff, an deren führenden Ende wiederum eine Wendel 12 nach der vorstehend beschriebenen Art eingespritzt ist. Anders als in der Ausführungsform von Figur 10 weist die Kunststoffhülse 30 hier jedoch ein Außengewinde 28 auf, welches über die gesamte Länge der Kunststoffhülse 30 verläuft, und welches durch die Vorsprünge 12 der Wendel 10 periodisch fortgesetzt wird, wie in der Figur 11 zu erkennen ist.

Ein weiterer Unterschied zu der Ausführungsform von Figur 10 besteht darin, dass der Gewindeeinsatz 26 von Figur 11 ein Antriebselement 56 aufweist, dass dauerhaft in der Kunststoffhülse 30 angeordnet ist. Das Antriebselement 56 weist an seinem dem führenden Ende nahen Abschnitt ein erstes Profil 58 auf, welches in der Schnittansicht B-B gut zu erkennen ist. Dieses erste Profil 58 steht mit dem Antriebsprofil der Wendel 10 in Eingriff.

An einem dem hinteren Ende nahen Abschnitt weist das Antriebselement 56 ein zweites Profil 60 auf, das insbesondere in der Draufsicht gut zu erkennen ist. Das zweite Profil entspricht von seiner Form in dieser Ausführungsform dem ersten Profil, hat jedoch einen etwas größeren Querschnitt, weil es mit Kunststoff umspritzt ist. Das zweite Profil 60 ist mit einem Antriebswerkzeug in Eingriff bringbar. Der Gewindeeinsatz 26 von Figur 11 kann daher einfacher eingeschraubt werden als derjenige von Fig. 10, weil lediglich ein geeignetes Antriebswerkzeug oben am zweiten Profil 60 angesetzt zu werden braucht, und nicht ein längliches Werkzeug durch den gesamten Hohlraum 54 der Kunststoffhülse 30 geführt werden muss. Auch ist der Gewindeeinsatz 26 von Figur 11 vollständig geschlossen.

Das Antriebselement 56 ist hohl, um Material und Gewicht zu sparen. Das Antriebselement 56 kann aus einem metallischen Werkstoff gebildet sein, der dem Gewindeeinsatz 26 eine vergleichsweise hohe Zugfestigkeit verleiht und gleichzeitig die Übertragung eines Drehmomentes von dem zweiten Profil 60 über das erste Profil 58 auf die Wendel 12 gestattet. Alternativ kann das Antriebselement jedoch auch aus einem armierten Kunststoff, insbesondere einem mit Kurz- oder Langfasern armierten Kunststoff bestehen, wobei die Fasern beispielsweise durch Kohlefasern oder Glasfasern gebildet sein können. Beispielsweise kann das Antriebselement 56 aus einem armierten Kunststoff hergestellt werden, der in einem Extrusionsverfahren am laufenden Meter hergestellt und dann auf die passende Länge abgelängt wird.

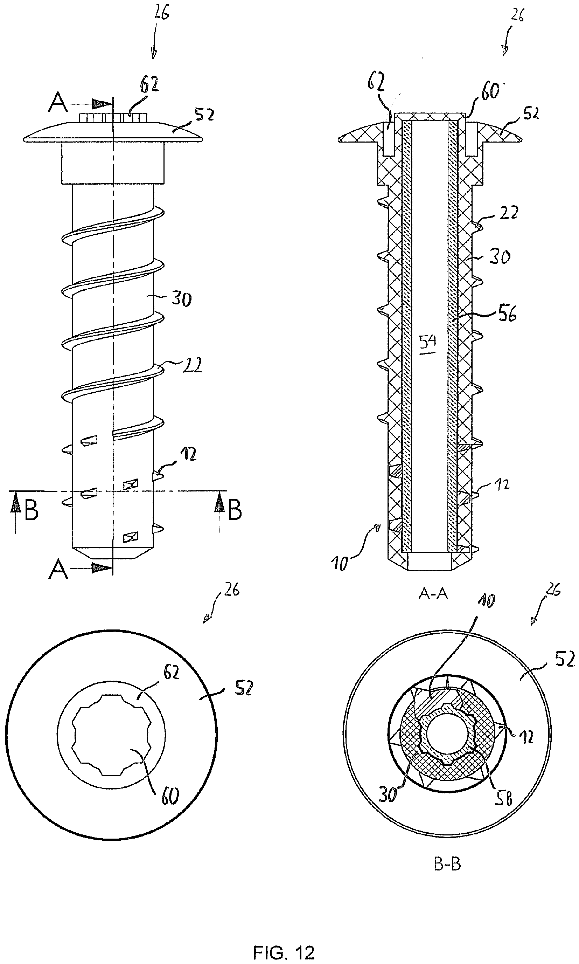

Figur 12 zeigt einen weiteren Gewindeeinsatz 26, der dem Gewindeeinsatz von Figur 11 sehr ähnlich ist und nicht erneut im Detail beschrieben wird. Der wesentliche Unterschied gegenüber dem Gewindeeinsatz von Figur 11 besteht darin, dass das zweite Profil 60 des Antriebselementes 56 nur geringfügig über den Kopfabschnitt 52 vorsteht. Stattdessen weist der Kopfabschnitt 52 eine Aussparung 62 auf, in der das zweite Profil 60 des Antriebselementes 52 angeordnet ist, wie insbesondere in der Draufsicht gut zu erkennen ist. Dabei ist die Aussparung 62 ausreichend groß um zu gestatten, dass das zweite Profil 60 mit einem geeigneten Antriebswerkzeug (nicht gezeigt) in Eingriff gebracht wird.

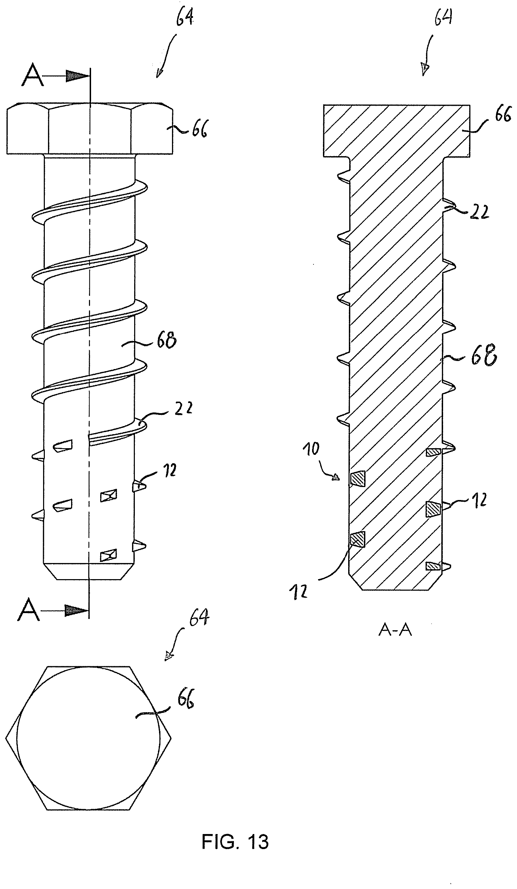

Schließlich zeigt Figur 13 einen erfindungsgemäßen Bolzen 64 mit einem als Kraftangriff ausgebildeten Kopf 66 und einem Schaftabschnitt 68, an dem ein Gewinde 22 ausgebildet ist. Der Bolzen 64 von Figur 13 ist als Kunststoff-Spritzgussteil ausgebildet, d. h. der Kopf 66, der Schaft 68 und das Gewinde 22 bestehen aus Kunststoff. Am führenden Ende des Schaftes 68 ist eine Wendel 10 von der in Figur 1 gezeigten Art eingespritzt, derart, dass das radial äußere Profil, nämlich die Vorsprünge 12, radial über den Schaftabschnitt 68 vorsteht und auf einer gedachten periodischen Fortsetzung des Gewindes 22 angeordnet ist.

Die eingespritzte Wendel 10 kann sämtliche Eigenschaften der oben beschriebenen Wendel 10 allein oder in Kombination aufweisen. Allerdings ist es nicht nötig, dass die Wendel 10 ein Antriebsprofil, d.h. Aussparungen 16 (siehe Figur 1) aufweist, da in diesem Fall die Wendel 10 kein separates Antriebswerkzeug oder Antriebselement aufnehmen soll. Stattdessen ist sie vollständig in den Schaft 68 eingespritzt, da in diesem Fall der Schaft massiv ausgebildet ist.

Der Bolzen 64 in Figur 13 hat den Vorteil, dass er äußerst kostengünstig hergestellt werden kann. Zudem ist das Kunststoffmaterial korrosionsbeständig. Gleichzeitig gestattet das radial äußere Profil 12 der Wendel 10, welches das Gewinde 22 periodisch fortsetzt, dass der Bolzen 64 selbstfurchend auch in harten Untergrund, beispielsweise Beton oder Mauerwerk eingeschraubt wird.

Es wird darauf hingewiesen, dass die beschriebenen Ausführungsformen als rein beispielhaft und die Erfindung nicht einschränkend anzusehen sind und die beschriebenen Merkmale in beliebiger Kombination von Bedeutung sein können.

### BEZUGSZEICHENLISTE

- 10: Wendel
- 12: radial äußere Vorsprünge
- 14: Wendelachse
- 16: Aussparungen
- 18: Profilband
- 20: Innengewindeprofil
- 22: Außengewindeprofil
- 24: Durchgangsöffnungen
- 26: Gewindeeinsatz
- 28: Außengewinde
- 30: Gewindeeinsatz-Hülse
- 32: Bolzen
- 34: Gewindeabschnitt
- 36: Antriebsabschnitt
- 38: Materialstreifen
- 40: obere Fläche
- 42: erste Seitenfläche
- 44: zweite Seitenfläche
- α: Wendelsteigung
- 46: gedachte Schnittlinien
- 48: gedachte Schnittebene
- 50: Furchkanten
- 52: Kopfabschnitt
- 54: Hohlraum
- 56: Antriebssystem
- 58: erstes Profil
- 60: zweites Profil
- 62: Aussparung
- 64: Bolzen
- 66: Kopf
- 68: Schaftabschnitt

## Patentansprüche

1. Bolzen (64) mit einem als Kraftangriff ausgebildeten Kopf (66) und einem Schaftabschnitt (68), an dem ein Gewinde (22) ausgebildet ist,
wobei der Bolzen (64) als Spritzgussteil, insbesondere als Kunststoffspritzgussteil ausgebildet ist und im Bereich seines führenden Ende eine Wendel aufweist, die ein radial äußeres Profil hat, das zum Furchen eines Gewindes ausgebildet ist,
wobei die Wendel derart von dem Material des Schaftes des Bolzens (64) umspritzt ist, dass das radial äußere Profil zumindest abschnittsweise radial über den Schaftabschnitt (68) vorsteht und auf einer gedachten periodischen Fortsetzung des Gewindes (22) angeordnet ist.

2. Bolzen (64) nach Anspruch 1, bei dem die Wendel (10)aus einem Materialstreifen (38) gebildet ist, der helixförmig um eine Längsachse (14) verläuft, wobei die Länge des Materialstreifens (38) mindestens der Länge eines Wendelgangs entspricht, vorzugsweise die Länge eines Wendelgangs übersteigt.

3. Bolzen (64) nach einem der vorgenannten Ansprüche, bei der das radial äußere Profil der Wendel (10) mehrere radial äußere Vorsprünge umfasst.

4. Bolzen (64) nach einem der vorgenannten Ansprüche, bei dem die Wendel (10) zumindest teilweise aus einem härtbaren Metall gebildet ist.

5. Bolzen (64) nach einem der vorgenannten Ansprüche, bei dem die Wendel (10) aus gehärtetem Metall gebildet ist, welches eine Härte von ≥ 58 HRC, vorzugsweise von ≥ 63 HRC und besonders vorzugsweise von ≥ 67 HRC aufweist, wobei HRC die Rockwellhärte nach ISO 6508-1 (1997) bezeichnet.

6. Bolzen (64) nach einem der vorgenannten Ansprüche, bei dem die Wendel (10) aus einem Bimetall gebildet ist und die einen gebogenen Bereich umfasst, wobei
der gebogene Bereich und ein Antriebsprofil zumindest teilweise aus Vergütungsstahl gebildet sind, und
das radial äußere Profil zumindest teilweise aus Schnellarbeitsstahl gebildet ist.

7. Bolzen (64) nach einem der vorgenannten Ansprüche, bei welchem der Durchmesser der Einhüllenden des radial äußeren Profils der Wendel (10) entlang eines Abschnitts der Wendel (10), der einem führenden Ende der Wendel (10) benachbart ist, in Richtung auf das führende Ende der Wendel (10) kleiner wird, wobei der genannte Abschnitt der Wendel (10) vorzugsweise mindestens der Länge eines halben, besonders vorzugsweise mindestens der Länge eines ganzen Wendelganges entspricht.

## Claims

1. A bolt (64) with a head (66) configured as a force applying member and a shaft portion (68), on which a thread (22) is formed,
wherein said bolt (64) is configured as an injection-moulded part, especially a plastic injection-moulded part, and has a coil in the region of its leading end, which has a radially outer profile that is configured for tapping a thread,
wherein said coil is encapsulated by the material of the shaft of said bolt (64) in such a way that the radially outer profile protrudes at least in some portions radially beyond said shaft portion (68) and is disposed on an imaginary periodical continuation of said thread (22).

2. The bolt (64) as claimed in claim 1, in which the coil (10) is formed from a strip of material (38) which runs helically about a longitudinal axis (14), wherein the length of the said of material (38) corresponds to at least the length of one coil turn, and preferably exceeds the length of one coil turn.

3. The bolt (64) as claimed in any of the preceding claims, in which the radially outer profile of the coil (10) comprises a plurality of radially outer projections.

4. The bolt (64) as claimed in any of the preceding claims, in which the coil (10) is at least partially made from a hardenable metal.

5. The bolt (64) as claimed in any of the preceding claims, in which the coil (10) is formed from hardened metal which has a hardness of ≥ 58 HRC, preferably ≥ 63 HRC and particularly preferably ≥ 67 HRC, wherein HRC refers to the Rockwell hardness according to ISO 6508-1 (1997).

6. The bolt (64) as claimed in any of the preceding claims, in which the coil (10) is formed from a bimetal and comprises a bent region, wherein
said bent region and a driving profile are formed at least partially from heat-treatable steel, and
the radially outer profile is formed at least partially from high-speed steel.

7. The bolt (64) as claimed in any of the preceding claims, in which the diameter of the envelope of the radially outer profile of the coil (10) along a portion of said coil (10) adjacent to a leading end of said coil (10) becomes smaller towards the leading end of said coil (10), wherein said portion of said coil (10) preferably corresponds to at least the length of half a coil turn, and particularly preferably at least the length of a whole coil turn.

## Revendications

1. Boulon (64) avec une tête (66) conçue comme un point d'application de force et une portion d'axe (68) sur laquelle est réalisé un filetage (22),
dans lequel le boulon (64) est conçu comme une pièce moulée par injection, plus particulièrement comme une pièce en matière plastique moulée par injection et qui comprend, au niveau de son extrémité directrice, une hélice qui présente un profil radial externe conçu pour le rainurage d'un filetage,
dans lequel l'hélice est surmoulée à partir du matériau de l'axe du boulon (64) de façon à ce que le profil radial externe dépasse au moins à certains endroits de manière radialement de la portion d'axe (68) et soit disposé sur un prolongement périodique imaginaire du filetage (22).

2. Boulon (64) selon la revendication 1 dans lequel l'hélice (10) est constituée d'une bande de matériau (38) qui s'étend de manière hélicoïdale autour d'un axe longitudinal (14), dans lequel la longueur de la bande de matériau (38) correspond au moins à la longueur d'un pas de l'hélice, de préférence dépasse la longueur d'un pas de l'hélice.

3. Boulon (64) selon l'une des revendications précédentes, dans lequel le profil radial externe de l'hélice (10) comprend plusieurs saillies radiales externes.

4. Boulon (64) selon l'une des revendications précédentes, dans lequel l'hélice (10) est constituée au moins partiellement d'un métal durcissable.

5. Boulon (64) selon l'une des revendications précédentes, dans lequel l'hélice (10) est constituée d'un métal durci qui présente une dureté ≥ 58 HRC, de préférence ≥ 63 HRC et plus particulièrement de préférence ≥ 67 HRC, HRC désignant la dureté Rockwell selon ISO 6508-1 (1997).

6. Boulon (64) selon l'une des revendications précédentes, dans lequel l'hélice (10) est constituée d'un bimétal et comprend une partie cintrée, dans lequel la partie cintrée et un profil d'entraînement sont constitués au moins partiellement d'un acier trempé et le profil radial externe est constitué au moins partiellement d'un acier à coupe rapide.

7. Boulon (64) selon l'une des revendications précédentes, dans lequel le diamètre de l'enveloppe du profil radial externe de l'hélice (10) le long d'une portion de l'hélice (10) qui est proche de l'extrémité directrice de l'hélice (10), diminue en direction de l'extrémité directrice de l'hélice (10), dans lequel la portion mentionnée de l'hélice (10) correspond de préférence au moins à la longueur d'une moitié d'un pas de l'hélice, plus particulièrement de préférence au moins à la longueur d'un pas entier de l'hélice.
